# EUROPEAN PATENT APPLICATION

(11) **EP 0 615 003 A1**
(43) Date of publication of application: **14.09.1994**
(21) Application number: 93114604.7
(22) Date of filing: 10.09.1993
(51) Int. Cl.: C25B 9/00, C02F 1/76

(54) **Alkali metal hypochlorite generation-storage unit**

(30) Priority: 11.03.1993 IT MI930468
(71) Applicant: DE NORA PERMELEC S.P.A., 20134 Milano (IT)
(72) Inventor: Serafini, Giorgio, Singapore 2263 (SG); Martelli, Roberto, Singapore 2263 (SG)
(74) Representative: Kinzebach, Werner, Dr.

(57) **Abstract**

An alkali metal hypochlorite generation-storage unit comprising at least one tank [1] provided with an electrolyte level mark [2], a bottom [7], one or more drain valves [6], an opening for inlet of the electrolyte feed materials, supports [8], and at least one pair of electrodes, namely at least one cathode [10] optionally provided with an electrocatalytic coating for the evolution of hydrogen gas separated from at least one anode [11] provided with an electrocatalytic coating for chlorine generation, said electrodes being electrically connected to an external direct current power source by suitable connections [9], and a means for promoting circulation of electrolyte by hydrogen gas-lift consisting in at least one assembly positioned inside or outside said tank and comprising a support plate [15], gasket [14], a lower portion [3] of a gas-lift tubular body provided with openings [4] for the in-flow of substantially gas-free electrolyte, an upper portion [5] of the gas-lift tubular body having an open top for the discharge of the hydrogen gas/electrolyte dispersion, and a zone for separating electrolyte from the hydrogen gas. In addition said electrolyzer may comprise a perforated hydrogen/electrolyte drip plate above said tubular body.

## Description

### BACKGROUND OF THE INVENTION

Processes for in-situ production of alkali metal hypochlorite, such as sodium hypochlorite, by electrolysis of dilute solutions of the corresponding chlorides in water, are well-known. These have been mainly developed to avoid safety problems associated with the transport and handling of liquid chlorine which can be used to produce the hypochlorite solution by suitable mixture with aqueous sodium hydroxide. Said safety problems are of a particular concern as most uses involve small capacity systems which are usually operated by people without specific technical competence. As is well-known, sodium hypochlorite is a strong oxidizing, bleaching and sterilizing agent. It is widely used for waste water treatment, for the sterilization of potable water, in swimming pools and in laundromats. Recently solid calcium hypochlorite has become available on the market but it does not meet the above requirements being difficult to dose and in particular is extremely expensive.

Today, various types of electrolyzers are available for the on-site production of hypochlorite. A most recent system is based on the use of membranes, as described for example in US Patent 4,129,493. This system involves higher investment and operating costs due to a more complex construction and operating procedures which require qualified operators. A suitable system must be capable of generating dilute hypochlorite solutions, for example containing 0.1-1% of active chlorine, at low cost. Suitable electrolyzers are typically free of diaphragms or membranes and have a different construction depending on the type of operation and can be either batch or continuous. The internal geometry of the known electrolyzer is conditioned by the need to overcome the problems affecting prior art designs without diaphragms or membranes for the production of dilute hypochlorite solutions, such as:
- loss of current efficiency. The sodium hypochlorite loss is essentially due to the chemical decay and to the electrochemical reduction/oxidation of hypochlorite at the cathode and anode respectively. In order to overcome such degradation, the electrolyte temperature must be kept between 15 and 40°C and a homogeneous current distribution maintained. These objectives are attained, according to the prior art teachings, by minimizing the interelectrodic gap and the relevant Joule effect and inserting into the system, either inside or outside the electrolyzer, suitable heat-exchange systems and gas distributors, as described in US Patent 4,495,048. The interelectrodic gap cannot be reduced below certain limits without increasing the electrochemical decay. A high current efficiency requires a hypochlorite concentration within certain maximum values, usually about 1% by weight. Also the type of electrocatalytic coating applied to the anodes must be optimized in order to prevent the catalytic mechanism of chemical decomposition of hypochlorite, as discussed in US Patent 4,118,307.
- fouling of the electrodes. Some dilute solutions of sodium chloride contain impurities such as magnesium, calcium, manganese, iron. These impurities are deposited on the cathodes or anodes, causing an uneven distribution of current, a reduction of the hypochlorite production efficiency, increase of the electrolysis voltage and, in the most severe cases, corrosion of the metal components. US Patent 3,974,051 discloses a system based on high circulation speed of the electrolyte (at least 0.3 meters/second) and use of cathodes having the form of a sheet with a low roughness. EP 0201951 suggests the use of cathodes having a high active area, such as beds of particles or fibers. EP 0188320 recommends avoiding exposure of electrode edges and therefore provides for a particular geometry for the inlet, circulation and outlet sections. According to US 4,087,337, it is sufficient to provide for a round profile of the electrodes and adopt a perforated structure for the anodes in order to promote efficient turbulence. US 4,087,337 proposes periodical current reversal, suitably adjusting the current density, in order to destroy the initial accumulation of deposits. All the above mentioned designs actually delay fouling of the electrodes and for this reason further suggestions are found in the literature such as for example providing for the purification of the dilute solutions of sodium chloride by means of ion exchange resins, before starting the electrolysis process or, alternatively, providing for periodical interruption of the operation, followed by electrode washing with hydrochloric acid or other similar solutions.
- complexity in recirculation means. US 4,118,307 and 4,693,806 suggest exploiting the natural recirculation motion promoted by gas evolution, instead of the forced recirculation obtained by means of pumps. The elimination of the pumps permits reduction of the investment and operating costs (electric energy is used only to operate the electrolyzer). The elimination of rotating parts provides for a high degree of reliability of operation. However, upon careful examination of US 4,118,307 and 4,693,806, it appears that the electrolyte circulation speed is far from the desired values required, according to technical literature teachings, to attain high energy yields and minimum fouling of the anodes.

As an overall consideration, the above illustrated prior art electrolyzers have a complex and usually expensive internal geometry which involves complex procedures for assembling and disassembling the components and all the same they do not eliminate but just reduce the electrode fouling.
It is an object of the present invention to provide for an a generation-storage unit for the on-site production of alkali metal hypochlorite, characterized by low-cost, high reliability and ease of operation even by non-technical operators.

In order to attain the above results, the unit of the present invention is provided with an improved natural recirculation system which optimizes use of potential energy found in the gas lift provided by hydrogen gas bubbles arising within the tubular body from the electrolysis of sodium chloride and water occurring between the electrodes at the passage of electric current, with the simultaneous formation of sodium hypochlorite. In particular the unit of the present invention is capable of attaining high recirculation rates of the electrolyte such as to reach an optimum compromise between the current efficiency and the rate of fouling. The unit of the present invention is optionally provided with devices for controlling the temperature of the alkali metal chloride dilute solution, that is the electrolyte, which devices are based on forced circulation of air or on water coils for heat exchange.

The innovative feature of the present invention is represented by the aforesaid natural recirculation system, which is simple to assemble and disassemble permitting an easy periodical cleaning of the components.

In order to attain successful operation at high current efficiency there is no need to apply the complex and costly steps of the prior art involving ion exchange resin purification, current reversal and acid pickling (with its attendant danger of damaging the assembly components). Further, with acid pickling there is the problem of waste disposal of the exhausted solution.

The unit of the present invention, in one preferred embodiment, comprises
a) a vertical tank with an open top made of corrosion resistant plastic material, such as PVC or fiber glass reinforced polyester, with a plane bottom which is maintained detached from a suitable foundation by supports to permit electrical connection to an external power source. Said tank is designed to accomodate installation of assembly b) either internally or externally (with appropriate connective piping).
b) an assembly consisting of :
   - one or more pairs of electrocatalytic electrodes, in the form of concentrically arranged tubular elements, such as cylinders, or parallely arranged sheets. Although each electrode may act as a bipolar electrode, the monopolar arrangement is preferred. In the case of multiple parallel electrodes with bipolar electrodes, only those positioned externally are provided with connections to the electric current source.
      The anodes are made of a valve metal, e.g. titanium in the form of either a solid sheet or a sheet provided with openings on the lower portion, or a perforated or an expanded metal sheet, provided with an electrocalytic coating for promoting chlorine generation at low overvoltage and are preferably externally positioned with respect to the cathodes.
      The cathodes are made of a metal, e.g. titanium, or other suitable conductive material capable of resisting corrosion under operation, optionally provided with an electrocatalytic coating for hydrogen evolution at low overvoltage.
      The electrocatalytic coating may be applied to a separate fine metal mesh which is then welded to the electrodes, so that its replacement results to be quite easy. Suitable separators to prevent shortcircuiting, made of fluorinated resins such as PTFE, PVDF or similar materials, provide for maintaining a well-defined interelectrodic gap, preferably comprised between 2 and 5 mm. The separators may be in the form of buttons, clips, projections or the like, applied to the surface of one of the electrodes.
   - a gas-lift tubular body having an open top for discharge of the gas/electrolyte flow into a gas/electrolyte separation zone and return of the electrolyte to the tank and openings on the lower portion to permit electrolyte flow to recirculate into the interelectrodic gap. The gas-lift tubular body preferably has a larger cross-section on the lower portion surrounding the electrodes, which is reduced in a transitional section to a smaller cross-section in the upper portion, facilitating gas-lift of the electrolyte which exits in the hydrogen/electrolyte separation zone. Hydrogen bubbles evolved at the cathode during electrolysis rise through the gas-lift tubular body creating a column of hydrogen bubbles/electrolyte dispersion having a much lower density with respect to the essentially gas-free electrolyte in the tank and thus establish a continuous hydrostatic differential forcing this electrolyte into the bottom of the assembly and thus into the electrodic gap for continuing electrolysis. The tubular body may be made of PVC or other suitable plastic material and is positioned around the electrodes and kept at a determined distance by means of suitable elastic spacers made of titanium or other suitable plastic material or corrosion-resistant metal. The tubular body preferably has a circular cross-section, but also a square or rectangular cross-section or variations thereof may apply.
      The inventors have found that the configuration of the tubular body having a smaller cross-section on the upper portion favours the gas lift effect thus greatly reducing both the electrochemical decay of hypochlorite and fouling of the electrodes. On the contrary, operating according to the teachings of the prior art, the electrochemical decay rate and fouling the electrodes become unacceptable, most probably due to the reduced speed of the electrolyte past the electrodes. A further configuration giving the same advantageous results of improved gas-lift comprises a tubular body having the same cross-section all along its length and a closed pipe or rod inserted inside the upper portion of said tubular body. Said closed pipe or rod may be kept into position by means of suitable spacers or otherwise supported on the internal electrode, having a smaller diameter with respect to the tubular body.
      In an alternative embodiment of the present invention, the tubular body and the external electrode are combined in a single element, preferably but not exclusively the anode. In this case the electrode consists of a tube made of a metal sheet provided with apertures in the lower portion to permit electrolyte flow in the interelectrodic gap, a transitional area to reduce the tube to a smaller cross-section in the upper side, and an open top as above described.
c) one or more drain valves for the discharge of the produced hypochlorite;
d) connection piping for the electrolyte to flow into and from the assembly when the assembly is installed outside the tank, which assembly is provided with connection/isolation valves.

It has been found that hydrogen evolved at the cathode, with the unit of the present invention, promotes a sufficient gas-lift to maintain an efficient recirculation of electrolyte. As the quantity of hydrogen necessary to provide for a sufficient upward motion is a function of the total Amperage fed to the electrodes, no control device for the electrolyte flow is necessary, nor is any malfunctioning control device required, as is the case when pumps are utilized.

The unit of the present invention may comprise one or more assemblies, each assembly may be installed inside or outside the unit. When the assembly is installed outside, it may be connected to more than one tank. The unit may be utilized as a single unit or as a multiplicity of units connected in series or in parallel. As regards the hydraulic connection, when more than one unit is used, usually the units are arranged in series in order to obtain higher concentrations of hypochlorite directly at the outlet of the last unit in the series.

The unit of the present invention is particularly suitable for batch operation, although continuous operation is as well possible.

The operation method may be summarized as follows:
- the tank is filled with a dilute solution containing approximately 30 gpl of NaCl in water. Preferably the tank is first partially filled with water, then the total quantity of sodium chloride is added and then water is added up to a level marked on the tank;
- after filling the tank to the marked level, electric current is applied with the selected Amperage (load);
- the gaseous hydrogen bubbles evolved at the cathodes are dispersed into the surrounding electrolyte, which dispersion rises above the electrodes enclosed in the gas lift tubular body (from the larger cross-section portion to the smaller cross-section portion) and pours onto the surface of the liquid in the tank from the open top of the tubular body, optionally through a perforated drip plate where a cooling effect is obtained by water evaporation;
- hydrogen is released into the air without any confinement to undergo dilution with large volumes of surrounding air to avoid the risk of hydrogen/oxygen explosion. If the electrolysis is to be carried out in a confined space suitable hydrogen venting must be provided.

The gas-lift effect of hydrogen arising through the tubular body brings fresh electrolyte into the interelectrodic gap. The gas-lift effect is advantageous from four points of view, namely :
- automatic high velocity electrolyte circulation without pumps
- decrease of the anodic destruction of the produced hypochlorite;
- reduction of cathodic fouling;
- completion of sodium chloride dissolution and homogeneization of the produced hypochlorite in the solution contained in the tank.

In the case of batch operation, where electric current is fed until the desired concentration of hypochlorite is obtained, the solution is transferred by gravity to a storage tank through the drain valve. When the assembly is installed outside the tank, the hydraulic connection/isolation valves may be switched to a second tank.

Due to the reliability of the process, substantially unaffected by external factors, the duration of the electrolysis time may be controlled by a timer activated when applying electric current to the unit, which timer stops the flow of electric current to the unit at the end of a pre-determined electrolysis time.

The unit is inherently safe because failures or malfunction of the equipment will not cause hazardous conditions to arise.

In an alternative embodiment of the invention directed towards providing for more efficient cooling of the solution thus obtaining a more concentrated hypochlorite solution and/or better current efficiency, the unit can be fitted with a top section comprising:
- a perforated drip plate located inside the tank and made of corrosion resistant material, such as PVC, said plate fixed to the upper portion of the tank by means of supports to set it level.
- a skirt fitted on top of said plate
- a demister sited above the exit point of circulating gas/electrolyte from the gas-lift tubular body, consisting of a layer of interwoven or superimposed PVC meshes
- a explosion-proof fan installed below the drip plate and above the liquid level, external to the tank body.

In this embodiment of the present invention the hydrogen-electrolyte mixture rising through the gas-lift tubular body exits the tubular body to enter the gas/electrolyte separation zone. The gas/electrolyte dispersion is distributed by means of the skirt onto the drip plate where hydrogen bubbles are released for venting to the atmosphere after passing through the demister. The electrolyte is cooled by the air stream generated by the fan, mostly by evaporation, while dripping back into the tank. The air stream should be of adequate volume so as to dilute the hydrogen below the explosive limits and to avoid its accumulation between the drip plate and the electrolyte level. Any interruption of electric power to the fan automatically stops the flow of electric power from the rectifier and consequently interrupts the electrolysis process and formation of hydrogen.

Another system to reduce the temperature of the electrolyte which may be utilized alone or combined with the above mentioned system, is based on the addition of a metal pipe, made of titanium or other corrosion resistant metal, optionally in the form of a coil submerged in the electrolyte, internally fed with a coolant such as cold water or brine, which system will facilitate the cooling of the electrolyte.

The invention will be now described in detail making reference to the figures wherein the same parts are defined by the same numerals, in particular:
- Fig. 1 is a cross-sectional view of the simpler embodiment of the present invention provided with an assembly positioned inside the tank
- Fig. 2 shows a detail of fig. 1 directed to show the mechanical connection of the assembly onto the bottom of the tank;
- Fig. 3 shows an alternative embodiment of the present invention wherein the assembly is positioned outside the tank;
- Fig. 4 shows a cross-sectional view of an embodiment of the unit of the present invention provided with means for reducing the temperature of the electrolyte by forced air stream;
- Fig. 5 is a top view of the embodiment of fig. 4;
- Fig. 6 shows the hydraulic connection in series of three electrolyzers in the embodiment of fig. 4, wherein the electrical connection, not illustrated, could be either in parallel or in series.

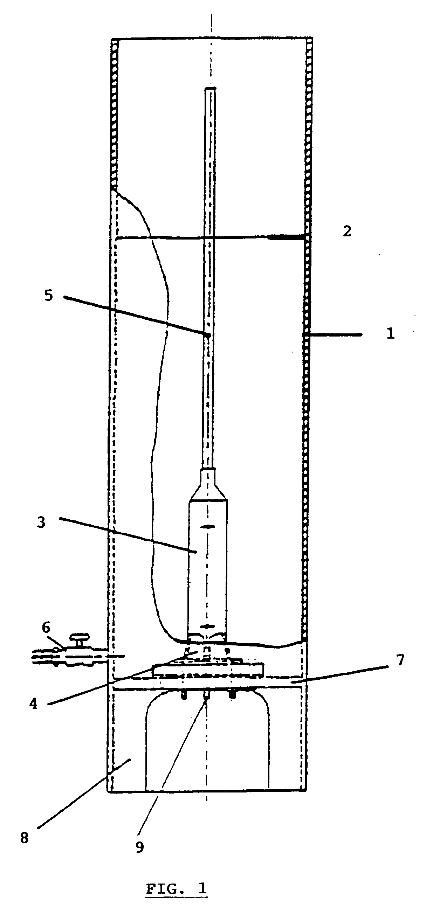

Making reference to fig. 1, the unit of the present invention comprises a cylindrical tank 1, with an open top, provided with a level mark 2, a bottom 7, supports 8 and drain valve 6. On the bottom 7, an assembly is connected which comprises a tubular body having a lower portion with a larger cross-section 3 surrounding a pair of concentric electrodes, a transitional area reduction portion, an upper portion having a smaller cross-section 5. The lower portion 5 is provided with openings 4 for the flow of the electrolyte into the interelectrodic gap. The electrodes are connected to the electric power source, not illustrated, by means of electrical connections 9.

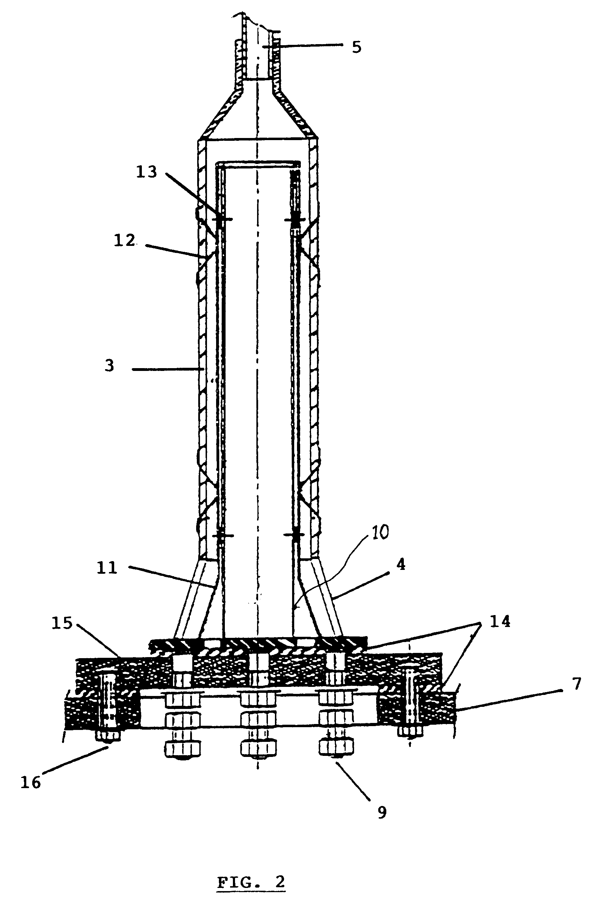

Fig. 2 shows a detail of the assembly comprising the lower portion 3 of the tubular body reduced through the area reduction portion to the smaller cross-section upper portion 5, the anode 11, the cathode 10, separators 13, the electrical connection 9 and the support 15. Spring spacers 12, made of elastic corrosion-resistant material, maintain the anode 11 spaced from the tubular body. The hydraulic seal between the electrodes, the support 15 and the tank bottom 7 is ensured by two gaskets 14, made of a terpolymer such as EPDM or other suitable non conductive elastic material corrosion-resistant to the hypochlorite solution. The interlelectrodic gap is maintained by separators 13 in the forms of buttons made of fluorinated resins such as PTFE, PVDF or similar materials applied to the anode. The tank is provided with drain valves not illustrated in the figure, for the removal of the tank content. The support 15 is applied onto the tank bottom 7 by means of screws 16. Therefore, the support 15, fastened to the assembly, is easily removable and, once removed, the various components are easily disassembled to facilitate periodical cleaning, which is necessary to carry out if production at high current efficiencies is to be obtained.

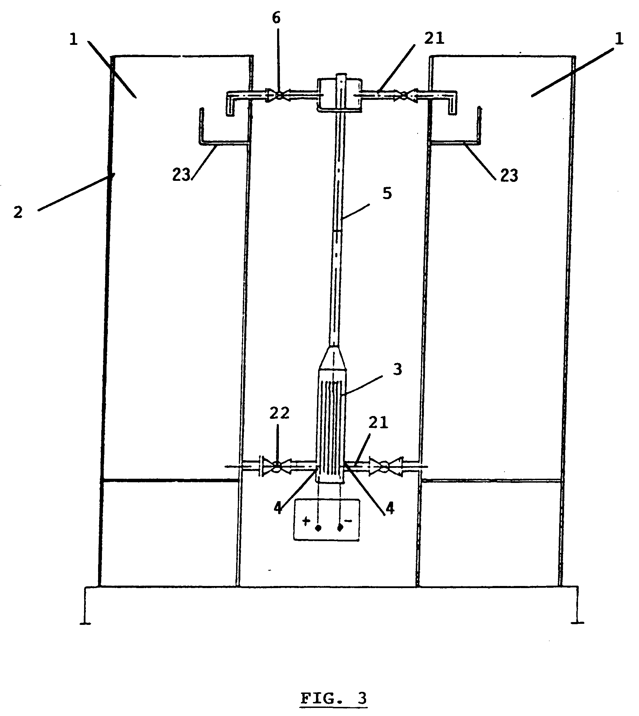

Fig. 3 shows a cross-section of an embodiment of the present invention wherein two tanks 1 are hydraulically connected to one assembly of the invention comprising the tubular body and the pair of electrodes, connection/isolation valves 22 fitted on feed piping 24 and drain valves 6. Valves 22 may be switched on and off in order to connect the assembly to one of the tanks and to the other at the end of the electrolysis time. The gas-lift tubular body exits in a gas/liquid separation zone which may be surmounted by the demister, not illustrated in the figure. Feed piping 24 is connected to the assembly by means of the openings 4 of the tubular body.

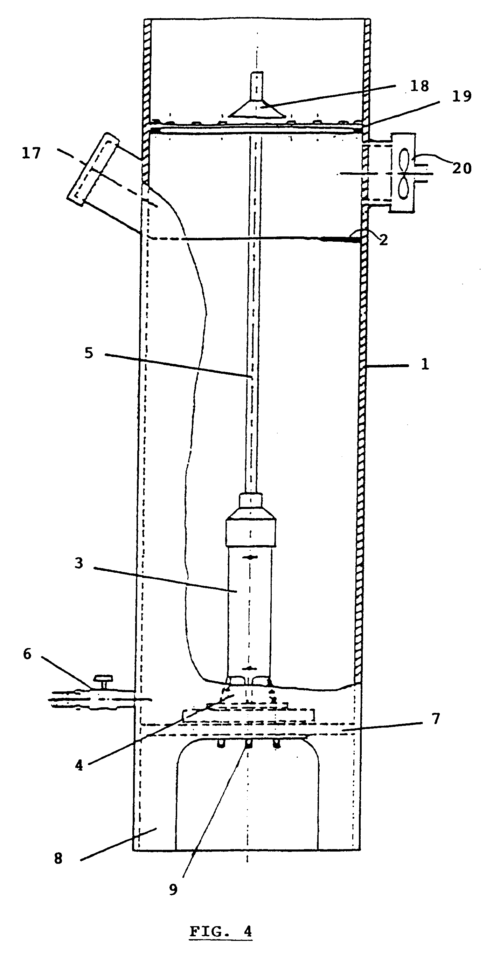

Fig. 4 shows another embodiment of the present invention wherein the unit, besides having the same parts as illustrated in figs. 1-2, in addition comprises on the upper portion of the tank 1, a loosely connected perforated drip plate 19 set level by suitable screws opposing a supporting ring on tank body, and, above said drip plate 19, a skirt 18, directed to uniformly distribute the gas/electrolyte dispersion pouring out of the tubular body 5 onto the drip plate 19. For cleaning purposes, before disassembling the assembly, the skirt and drip plate may be removed by unbolting the screws. The fan 20 provides for an adequate stream of air and prevents any accumulation of hydrogen gas which may remain entrapped between the drip plate 19, the electrolyte level 2 and to remove water vapor from the electrolyte dripping from drip plate 19 through the holes of the same, thus facilitating cooling by evaporation. The inlet 17, which is not necessary in the embodiments illustrated in figs. 1 and 3 which have an open top, permits the introduction of the quantity of salt and water necessary to make a solution with a concentration of 30 grams/liter of NaCl. In the embodiments of figs. 1 and 3 salt may be fed to the tank either directly or through a suitable filter 23 in fig. 3.

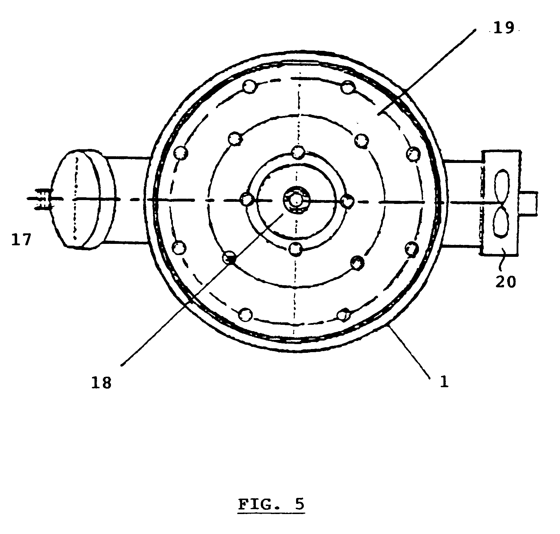

Fig. 5 is a top view of the unit of fig. 4 which permits observing the holes of drip plate 19.

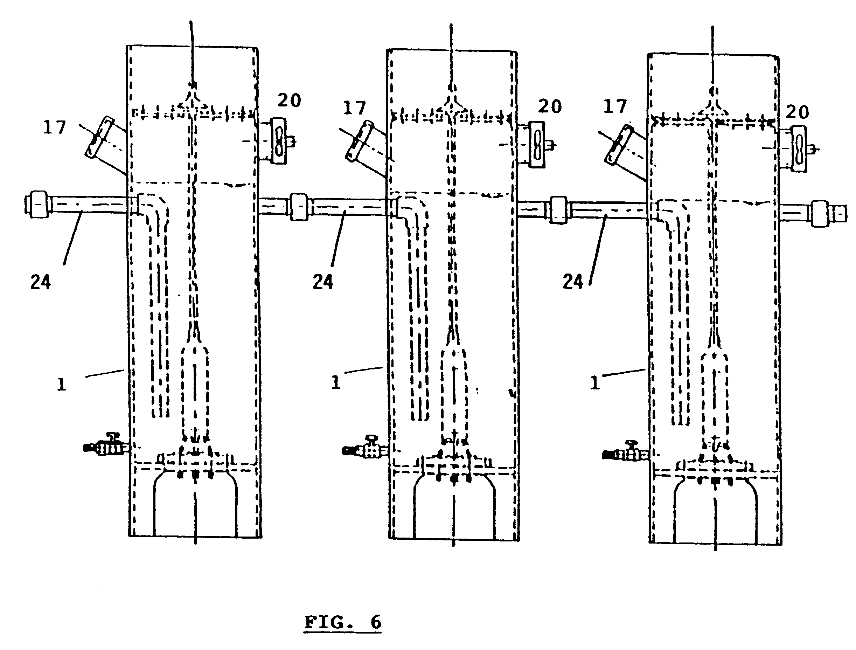

Fig. 6 shows the hydraulic connections in the series of three electrolyzers of fig. 4 suitable for continuous electrolysis, while batch electrolysis is preferable using the unit of figs. 1-4. The feed piping 24 transfer the produced hypochlorite from one unit to the other.

Different embodiments are possible with the unit of the present invention. For example, the gas-lift tubular body may only be as long as to permit its top to terminate slightly below the liquid level 2. This embodiment is certainly efficient although the embodiments illustrated in figs. 1-4 are more preferable as they allow easier release of hydrogen and more efficient cooling due to the increased water evaporation, although a higher quantity of mist is entrained in the hydrogen gas to be vented.

It is also obvious that the electrical connection could be provided not only on the bottom of the tank but also on top of the tank, for example on the edge or on a suitable cover or, if present, on the drip plate 19. In this way, there would be no need for sealing gaskets 14.

Further, with the assembly positioned outside the tank, the embodiment wherein the tubular body and the more external electrode are combined in one element provides more advantageous results. This combined element which may have any cross-section, e.g. circular, rectangular or square, is connected to the tubular reduction transition section which provides for adjusting the larger cross-section of the lower portion to the smaller cross-section of the upper portion. The counter-electrode is positioned inside the combined element (tubular body-electrode) by means of supports. Electrolyte flows from the tank to the assembly through a connecting pipe and at the end of the electrolysis time the assembly is disconnected by simply switching off the connection/isolation valves. The tank in this case may be alternatively used as a storage tank. This permits carrying out electrolysis until hypochlorite at the desired concentration is obtained in one tank, and at that time the hydraulic flow is diverted to the other tank.

The following examples illustrate the results of tests carried out with different embodiments of the present invention. However, it has to be understood that the present invention is not intended to be limited thereto.

### EXAMPLE 1

An unit as described in fig. 1, was provided having the following characteristics:

| - tank: | |
|---|---|
| total height | 1500 mm |
| distance from foundation | 250 mm |
| diameter | 400 mm |
| volume (available for the electrolyte) | 150 l |
| - anode | hollow pipe 415 mm long, having an internal diameter of 50 mm and an external diameter of 53 mm, made of a mesh of expanded sheet of titanium grade 1 provided with DSA(R) coating produced by De Nora Permelec S.p.A. |
| - cathode | hollow pipe 410 mm long, having an external diameter of 44 mm, made of Titanium, grade 1. |
| - interelectrodic gap | 3 mm |
| - tubular body | PVC pipe |
| lower portion | 500 mm long - 62 mm internal diameter, provided with slots 50 mm long on the lower edge side |
| upper portion | 750 mm long - 12 mm internal diameter |
| - gas-lift capacity | 150 liters/hour |
| - electric current | 100 Ampere (4 Volts). |

Pure sodium chloride of evaporated grade was fed to the tank filled with water not subjected to any softening or deionization process. Tests have been carried out at the following conditions

| | |
|---|---|
| - average ambient temperature | 24-32°C |
| - relative humidity | 70-95 % |
| - water temperature | 30 °C |
| - sodium chloride concentration in water | 30 g/l |

The following results were obtained.

| | terms of test | |
|---|---|---|
| | 16 hours | 20 hours (extended from 16 hours) |
| - available chlorine produced | 1185 g | 1290 g |
| - available chlorine concentration | 7.9 g/l | 8.6 g/l |
| - electric power consumption | 5.4 kWh/kg | 6.2 kWh/kg |
| - sodium chloride consumption (*) | 3.8 kg/kg | 3.5 kg/kg |
| - solution temperature (at the end of the test) | 35 °C | 39 °C |

| | | |
|---|---|---|
| (*) Here and in the following Examples, the consumption of NaCl is expressed as kilogram per kilogram of produced available chlorine. | | |

### EXAMPLE 2

The unit of example 1 was modified as illustrated in fig. 4 to improve cooling of the electrolyte and diluting hydrogen with air to remain outside the explosion risk limits. The height of the assembly was brought to 1700 mm and in the additional 200 mm the following components were inserted:
a) a perforated drip plate made in PVC, provided with a central hole for the passage of the upper portion of the tubular body and fixed by screws
b) a skirt on top of the drip plate
c) a 20 W fan, fitted onto a opening on the side of the tank below the drip plate and above the liquid level.

The hydrogen-electrolyte mixture rises through the gas-lift tubular body and is distributed by means of the skirt onto the surface of the drip plate where hydrogen gas is released to the atmosphere. The flow of air generated by the fan provides for cooling of the electrolyte which takes place mainly by evaporation while the electrolyte drops into the tank.

The following results have been obtained:

| | terms of test | |
|---|---|---|
| | 16 hours | 20 hours (extended from the 16 hours) |
| - available chlorine produced | 1230 g | 1335 g |
| - available chlorine concentration | 8.2 g/l | 8.9 g/l |
| - electric power consumption | 5.2 kWh/kg | 6.0 kWh/kg |
| - sodium chloride consumption | 3.7 kg/kg | 3.4 kg/kg |
| - solution temperature (at the end of the test) | 34 °C | 35 °C |

### EXAMPLE 3

On the same unit of Example 1, a cooling coil, consisting of a titanium tube fed with cold water, was added in the tank. The cold water flow rate through the tank was 150 l/h.

The following results were obtained

| | terms of test | |
|---|---|---|
| | 16 hours | 20 hours (extended from the 16 hours) |
| - available chlorine produced | 1245 g | 1365 g |
| - available chlorine concentration | 8.3 g/l | 9.1g/l |
| - electric power consumption | 5.1 kWh/kg | 5.7 kWh/kg |
| - sodium chloride consumption | 3.6 kg/kg | 3.3 kg/kg |
| - solution temperature (at the end of the test) | 32 °C | 34 °C |

A different embodiment of the unit of Example 1 wherein the electrodes had a reduced length in order to maintain the current density at 2200 A/m2 at the anode and 2500 A/m2 at the cathode, gave the following results:

| | terms of test | |
|---|---|---|
| | 20 hours | 22 hours (extended from the 20 hours) |
| - equivalent chlorine produced | 1500 g | 1545 g |
| - available chlorine concentration | 10.0 g/l | 10.3 g/l |
| - electric power consumption | 6.5 kWh/kg | 6.9 kWh/kg |
| - sodium chloride consumption | 3.0 kg/kg | 2.9 kg/kg |
| - solution temperature (at the end of the test) | 33 °C | 34 °C |

### EXAMPLE 4

On the same unit of Example 1, the cathode was provided with a catalytic coating for the evolution of hydrogen, in the form of an activated valve metal mesh. The following results were obtained:

| | terms of test |
|---|---|
| | 10 hours |
| - available chlorine produced | 895 g |
| - available chlorine concentration | 5.9 g/l |
| - electric power consumption | 4.2 kWh/kg |
| - sodium chloride consumption | 5.0 kg/kg |
| - solution temperature (at the end of the test) | 32 °C |

## Claims

1. An alkali metal hypochlorite generation-storage unit comprising at least one tank 1 provided with an electrolyte level mark 2, a bottom 7, one or more drain valves 6, an opening for inlet of the feed electrolyte, supports 8, and at least one pair of electrodes, namely at least one cathode 10 for the evolution of hydrogen gas and at least one anode 11 provided with an electrocatalytic coating for the generation of chlorine, said electrodes being electrically connected to an external direct current power source by suitable connections 9, and a means for promoting circulation of electrolyte over the electrodes by hydrogen gas-lift
characterized in that said means consists in at least one assembly positioned inside or outside said tank and comprising
a support plate 15,
a gasket 14,
a lower portion 3 of a gas-lift tubular body provided with openings 4 for the in-flow of the substantially gas-free electrolyte,
an upper portion 5 of the gas-lift tubular body having an open top for the discharge of the hydrogen gas/electrolyte dispersion,
a zone of separation of the hydrogen gas/electrolyte dispersion at least the lower portion 3 of said assembly surrounding the electrodes.

2. The unit of claim 1 wherein the gas-lift tubular body has different cross-sections, the lower portion 3 having a larger cross-section and the same height as the electrodes, the upper portion 5 having a smaller cross-section, and an intervening transition portion reducing the cross-section.

3. The unit of claim 2 wherein the upper portion 5 and the lower portion 3 of the tubular body are made of two separate parts fitted together through the intervening transition portion.

4. The unit of claim 1 wherein the gas lift-tubular body has the same cross-section all along its length.

5. The unit of claim 4 wherein the gas-lift tubular body comprises a closed pipe or rod inserted in its upper portion.

6. The unit of anyone of claims 1 to 5 characterized in that the upper portion 5 exits over or below the level of the solution in the tank.

7. The unit of anyone of claims 1 to 5 and 6 first alternative characterized in that said zone of separation of the hydrogen gas/electrolyte dispersion comprises a drip plate 19 above the electrolyte level 2 and a skirt 18 for distributing the electrolyte returning to the tank.

8. The unit of claim 7 wherein a demister to separate the hydrogen gas/electrolyte dispersion is positioned above said drip plate.

9. The unit of claim 7 characterized in that it further comprises an explosion-proof fan 20 installed below the drip plate 19 and above the electrolyte level 2, external to the tank body.

10. The unit of claim 1 wherein said assembly is externally positioned and is hydraulically connected to at least one tank 1 by means of piping 21 provided with connection/isolation valves 22.

11. The unit of anyone of claims 1 to 10 wherein the electrodes are concentrically arranged tubes, or parallely arranged sheets.

12. The unit of anyone of claims 1 to 10 wherein said electrodes are a multiplicity of interposed electrodes.

13. The unit of claim 12 wherein said electrodes are bipolar electrodes.

14. The unit of anyone of claims 1 to 13 wherein said electrodes are made of a solid sheet provided with openings at least in the lower part or are made of a perforated or expanded sheet, screen or mesh.

15. The unit of anyone of claims 1 to 14 wherein one electrode of said pair of electrodes is the lower portion of the gas-lift tubular body.

16. The unit of anyone of claims 1 to 15 wherein said electrodes are kept apart by means of suitable separators 13.

17. The unit of anyone of claims 1 to 16 wherein said pair of electrodes are kept apart from said lower portion 3 of the tubular body by means of spacers 12.

18. The unit of anyone of claims 1 to 17 wherein said cathode 10 is provided with a catalytic coating for the evolution of hydrogen, preferably said catalytic coating is in the form of a fine activated mesh.

19. The unit of anyone of claims 1 to 18 characterized in that it further comprises a cooling pipe, preferably said cooling pipe is one of said electrodes.

20. Process for the production of hypochlorite by electrolysis of dilute solutions of alkali metal salts characterized in that at least one unit of claims 1-19 is used.

21. The process of claim 20 characterized in that a multiplicity of electrolyzers of claims 1-19 is connected in a hydraulic series.
